# FASCICULE DE BREVET EUROPEEN

(11) **EP 3 043 042 B1**
(45) Date de publication et mention de la délivrance du brevet: **26.07.2017**
(21) Numéro de dépôt: 15198467.1
(22) Date de dépôt: 08.12.2015
(51) Int. Cl.: F01N 3/20, F01N 9/00, F02D 17/02

(54) **PROCÉDÉ ET SYSTÈME DE GESTION D'UN SYSTÈME DE DÉPOLLUTION D'UN VÉHICULE AUTOMOBILE**
VERFAHREN UND SYSTEM ZUR STEUERUNG EINES ABGASREINIGUNGSSYSTEMS EINES KRAFTFAHRZEUGS
METHOD AND SYSTEM FOR MANAGING A POLLUTION CONTROL SYSTEM OF A MOTOR VEHICLE

(30) Priorité: 07.01.2015 FR 1550093
(43) Date de publication de la demande: 13.07.2016
(73) Titulaire: Peugeot Citroën Automobiles SA, 78140 Vélizy-Villacoublay (FR)
(72) Inventeur: BARON, DAMIEN, 92400 COURBEVOIE (FR); DEZALOT, SYLVAIN, 78000 VERSAILLES (FR); STRUB, EMMANUEL, 70250 RONCHAMP (FR)

(56) Documents cités:
- FR-A1- 2 981 689
- US-A1- 2010 122 521
- US-A1- 2013 133 309

## Description

L'invention a trait à un procédé de gestion d'un système de dépollution d'un véhicule automobile.

Les véhicules automobiles sont équipés d'une part d'un réservoir de carburant dans lequel est contenu le carburant injecté au sein du moteur, et d'autre part de réservoirs annexes et, notamment dans le cas de certains véhicules à moteur diesel (appellation faisant référence au carburant utilisé), d'au moins un réservoir d'agent réducteur de dépollution.

L'agent réducteur de dépollution, ci-après appelé agent réducteur, est utilisé pour la mise en oeuvre de systèmes de dépollution et notamment du système de réduction catalytique sélective plus connu sous l'acronyme SCR (acronyme de la désignation anglaise Selective Catalytic Reduction). Ce système de dépollution SCR permet, par injection d'agent réducteur dans le flux de gaz d'échappement, de réduire considérablement voire d'éliminer totalement les oxydes d'azote (NOₓ) en convertissant ces derniers en azote (N₂) et en eau (H₂O).

On s'intéressera plus particulièrement dans la suite de la description au système SCR dit « liquide » utilisant un liquide comme agent réducteur tel que de l'ammoniac ou un précurseur de l'ammoniac, par exemple de l'urée ou un dérivé de l'urée.

Un calculateur pilote le système SCR en fonction de diverses données issues par exemple de capteurs présents au sein du véhicule.

Le système SCR comprend un réservoir au sein duquel est stocké l'agent réducteur, celui-ci est ensuite acheminé jusqu'à la ligne d'échappement via une canalisation pour enfin être injecté au sein des gaz d'échappement, en amont d'un catalyseur, par un injecteur d'agent réducteur dont l'ouverture et la fermeture sont pilotées par le calculateur. Le catalyseur permet d'accélérer la réaction chimique dans le but de transformer les oxydes d'azote (NOₓ), présents au sein des gaz d'échappement, en azote (N₂) et en eau (H₂O). Le système comprend, en outre, une pompe commandée par le calculateur et agencée pour fonctionner dans un sens primaire afin d'introduire l'agent réducteur, via l'injecteur, au sein de la ligne d'échappement et dans un sens secondaire pour purger l'injecteur d'agent réducteur et la canalisation.

L'agent réducteur sous la forme d'une solution aqueuse d'urée (par exemple composée de 32.5% en masse d'urée) utilisée au sein du système SCR gèle à environ -11°C. C'est pourquoi le calculateur pilote généralement la purge de la canalisation et de l'injecteur après l'arrêt du moteur. De plus, le réservoir du système SCR est associé à un dispositif de chauffage permettant, lors d'un démarrage du moteur lorsque l'agent réducteur contenu au sein du réservoir est gelé, et si les conditions climatiques et plus particulièrement la température au voisinage du système SCR le permet, de liquéfier l'agent réducteur afin que celui-ci puisse être injecté.

Le système SCR, tel que décrit ci-dessus, est présenté au sein du document FR 2 981 689, qui mentionne en outre le fait que le calculateur puisse activer la purge de la canalisation et de l'injecteur lorsque le moteur est en fonctionnement et plus particulièrement si la température au voisinage du système SCR est inférieure à une valeur de température prédéterminée correspondant à un risque de gel de l'agent réducteur. Lorsque l'opération de purge est lancée par le calculateur pendant que le moteur est en fonctionnement, l'injecteur s'ouvre de sorte à aspirer les gaz d'échappement sous l'action de la pompe fonctionnant dans le sens secondaire, l'agent réducteur présent au sein de l'injecteur et de la canalisation réintégrant ainsi le réservoir. En alternative ou en complément de cette aspiration des gaz d'échappement, ce document antérieur propose d'aspirer de l'air ambiant au travers d'une vanne de mise à l'air libre positionnée sur la canalisation du système SCR.

Ce fonctionnement ne va pas sans inconvénients.

D'une part, lorsque l'injecteur aspire des gaz d'échappement pour réaliser la purge, celui-ci aspire également des particules de suies, issues de combustions incomplètes, présentes au sein des gaz d'échappement avec pour principal conséquence d'encrasser l'injecteur et la canalisation. L'encrassement partiel ou total de l'injecteur et de la canalisation a pour effet d'entrainer un non-respect des dosages d'agent réducteur préconisés à injecter et ainsi de ne pas dépolluer correctement les gaz d'échappement.

D'autre part, la solution alternative ou complémentaire proposée consistant à aspirer de l'air ambiant permet d'éviter cet encrassement mais nécessite l'implantation d'une vanne de mise à l'air libre sur la canalisation, pilotée par le calculateur, au détriment du coût, de l'encombrement et de la fiabilité du système de dépollution SCR.

Un premier objectif est de proposer un procédé de gestion d'un système de dépollution permettant, lorsque le moteur est en fonctionnement et que la température au voisinage du système de dépollution est inférieure ou égale à une valeur prédéterminée, de purger le système de dépollution sans altérer ses performances, tout en optimisant le coût, l'encombrement et la fiabilité du système de dépollution.

Un deuxième objectif est de proposer un système de dépollution configuré pour mettre en oeuvre le procédé de dépollution répondant à l'objectif ci-dessus exprimé.

Un troisième objectif est de proposer un véhicule automobile comprenant un système de dépollution répondant à l'objectif ci-dessus exprimé.

A cet effet, il est proposé, en premier lieu, un procédé de gestion d'un système de dépollution, piloté par un calculateur, d'un groupe motopropulseur d'un véhicule automobile, ce groupe motopropulseur comprenant :
- un moteur à combustion interne présentant au moins un cylindre alimenté en carburant, via un injecteur de carburant piloté par le calculateur qui commande l'injection de carburant ou la coupure de cette injection ;
- une ligne d'échappement des gaz issus de la combustion ;
le système de dépollution comprenant :
- un réservoir contenant un agent réducteur de dépollution ;
- un catalyseur intégré dans la ligne d'échappement pour être traversé par les gaz d'échappement ;
- un injecteur d'agent réducteur, placé en amont du catalyseur et piloté selon un état d'ouverture permettant d'établir la communication entre une canalisation et la ligne d'échappement, et un état de fermeture permettant de suspendre la communication entre la canalisation et la ligne d'échappement ;
- la canalisation reliant le réservoir à l'injecteur d'agent réducteur ;
- une pompe commandée par le calculateur, et agencée pour fonctionner dans un sens primaire pour introduire l'agent réducteur, via l'injecteur d'agent réducteur, au sein de la ligne d'échappement, et dans un sens secondaire pour purger l'injecteur d'agent réducteur et la canalisation ;
ce procédé comprenant la prise en compte au moins des paramètres suivants :
- état général du moteur : fonctionnement ou arrêt ;
- température dans le voisinage du système de dépollution ;
ce procédé comprenant également la prise en compte des paramètres suivants :
- état du ou des cylindre(s) : injection ou coupure d'injection ;
- paramètre lié à la composition des gaz présents au sein de la ligne d'échappement ;
ce procédé comprenant une opération d'actionnement de la pompe dans son sens secondaire si les conditions suivantes sont conjointement vérifiées :
- moteur en état de fonctionnement ;
- cylindre(s) en état de coupure d'injection ;
- température dans le voisinage du système de dépollution inférieure ou égale à une valeur prédéterminée ;
- paramètre lié à la composition des gaz égal à une consigne prédéterminée;
et une opération d'actionnement d'ouverture de l'injecteur d'agent réducteur.

Diverses caractéristiques supplémentaires peuvent être prévues, seules ou en combinaison :
- le paramètre lié à la composition des gaz est une quantité d'air pénétrant au sein du moteur ;
- le paramètre lié à la composition des gaz est un temps ;
- le procédé comprend la prise en compte du paramètre suivant:
   - vitesse de roulage du véhicule ;
   l'opération d'actionnement de la pompe dans son sens secondaire étant réalisée si:
   - la vitesse de roulage du véhicule est supérieure ou égale à un seuil prédéterminé ;
- le procédé comprend la prise en compte du paramètre suivant:
   - température des gaz, au sein de la ligne d'échappement, dans le voisinage de l'injecteur d'agent réducteur ;
   l'opération d'actionnement de la pompe dans son sens secondaire étant réalisée si:
   - la température des gaz est inférieure ou égale à une instruction prédéterminée ;
- le système de dépollution est un système de réduction catalytique sélective.

Il est proposé, en deuxième lieu, un système de dépollution, piloté par un calculateur, d'un groupe motopropulseur d'un véhicule automobile, ce système de dépollution comprenant:
- un réservoir contenant un agent réducteur de dépollution ;
- un catalyseur intégré dans la ligne d'échappement pour être traversé par les gaz d'échappement ;
- un injecteur d'agent réducteur, placé en amont du catalyseur et piloté selon un état d'ouverture permettant d'établir la communication entre une canalisation et la ligne d'échappement, et un état de fermeture permettant de suspendre la communication entre la canalisation et la ligne d'échappement ;
- la canalisation reliant le réservoir à l'injecteur d'agent réducteur ;
- une pompe commandée par le calculateur, et agencée pour fonctionner dans un sens primaire pour introduire l'agent réducteur, via l'injecteur d'agent réducteur, au sein de la ligne d'échappement, et dans un sens secondaire pour purger l'injecteur d'agent réducteur et la canalisation ;
le calculateur prenant en compte les paramètres suivants:
- état général du moteur : fonctionnement ou arrêt ;
- température dans le voisinage du système de dépollution ;
- état du ou des cylindre(s) : injection ou coupure d'injection ;
- paramètre lié à la composition des gaz présents au sein de la ligne d'échappement ;
la pompe étant actionnée dans son sens secondaire si les conditions suivantes sont conjointement vérifiées:
- moteur en état de fonctionnement ;
- cylindre(s) en état de coupure d'injection ;
- température dans le voisinage du système de dépollution inférieure ou égale à une valeur prédéterminée ;
- paramètre lié à la composition des gaz égal à une consigne prédéterminée.
et l'injecteur (25) d'agent réducteur est ouvert

Il est proposé, en troisième lieu un véhicule automobile comprenant un système de dépollution tel que décrit ci-dessus.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue schématique illustrant un véhicule (en pointillés) équipé d'un groupe motopropulseur (en trait plein).
- la figure 2 est une vue schématique en coupe du groupe motopropulseur illustré sur la figure 1.

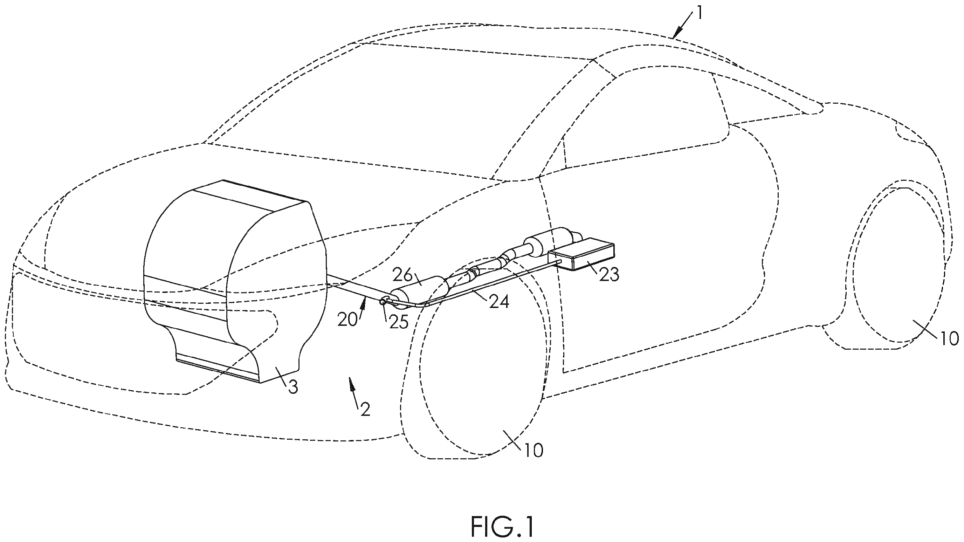

Sur la figure 1 est représenté un véhicule 1 automobile comprenant un groupe 2 motopropulseur. Le groupe 2 motopropulseur comprend d'une part un moteur 3 à combustion interne. Avantageusement et tel que représenté sur la figure 1, le moteur 3 à combustion interne est un moteur 3 diesel (appellation faisant référence au carburant utilisé).

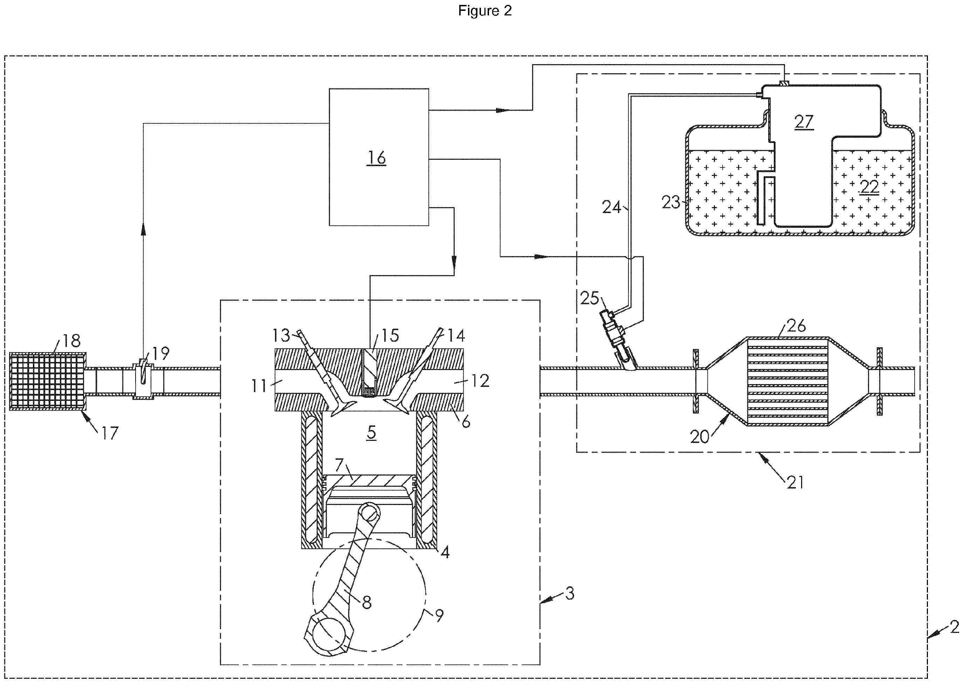

Tel qu'illustré schématiquement sur la figure 2 pour des raisons de clarté, le moteur 3 comprend au minimum un cylindre 4 définissant une chambre 5 de combustion, cette chambre 5 de combustion étant délimitée, dans une partie supérieure, par une culasse 6, et dans une partie inférieure, par un piston 7 mobile au sein du cylindre 4. Le mouvement du piston 7 permet d'entrainer un vilebrequin 9 au travers d'une bielle 8, le mouvement du vilebrequin 9 étant ensuite transmis aux roues 10 du véhicule 1 par l'intermédiaire de différents mécanismes (non représentés).

La culasse 6 comprend au moins deux conduits 11, 12 à savoir un conduit 11 d'admission d'air et un conduit 12 d'échappement permettant l'évacuation des gaz brûlés, ces conduits **11, 12** débouchant dans la chambre **5** de combustion. Le conduit **11** d'admission est associé à une soupape **13** d'admission mobile entre une position d'ouverture dans laquelle la soupape **13** d'admission est écartée de la culasse **6** pour permettre la communication entre le conduit **11** d'admission et la chambre **5** de combustion, et une position de fermeture dans laquelle la soupape **13** d'admission est en contact avec la culasse **6** et empêche la communication entre le conduit **11** d'admission et la chambre **5** de combustion.

Tout comme le conduit **11** d'admission, le conduit **12** d'échappement est associé à une soupape **14** d'échappement mobile entre une position d'ouverture et une position de fermeture.

Le cylindre **4** est également associé à un injecteur **15** de carburant, fixé sur la culasse **6,** cet injecteur **15** de carburant venant injecter directement (injection directe) le carburant sous pression au sein de la chambre **5** de combustion. Lors d'un cycle moteur, l'injection de carburant au sein de la chambre **5** de combustion où se trouve de l'air comprimé permet d'initier la combustion.

Tel qu'illustré sur la figure 2, un calculateur **16** pilote le moteur **3** et notamment chaque injecteur **15** de carburant, ce calculateur **16** ayant ainsi en temps réel l'état de chaque cylindre **4** à savoir soit l'injection de carburant ou la coupure d'injection de carburant.

Tel qu'illustré sur la figure 2, l'air introduit au sein de chaque chambre **5** de combustion, via chaque conduit **11** d'admission, pénètre au sein du moteur **3** via une ligne **17** d'admission. Cette ligne **17** d'admission comprend, d'une part, à une extrémité, un filtre **18** à air dont la fonction est notamment d'empêcher l'infiltration, au sein du moteur **3,** de particules et de poussières minérales contenues dans l'air ambiant. La ligne **17** d'admission comprend, d'autre part, entre le filtre **18** à air et le moteur **3,** un débitmètre **19** d'air, par exemple de type massique, permettant de mesurer la quantité d'air admise dans le moteur **3.** Les données issues du débitmètre **19** sont en temps réel transmises au calculateur **16.**

Les gaz d'échappement (également appelé gaz brûlés), issus des combustions au sein de chaque chambre **5** de combustion, sont rejetés dans l'atmosphère via une ligne **20** d'échappement. Divers systèmes de dépollution sont implantés sur cette ligne **20** d'échappement afin de traiter les gaz d'échappement et ainsi réduire les émissions polluantes du véhicule **1.**

Dans la suite de la description, on s'intéressera plus particulièrement au système **21** de dépollution dénommé système de réduction catalytique sélective plus connu sous l'acronyme SCR, et ci-après, appelé système **21** SCR. Le système **21** SCR permet, par injection d'un agent **22** réducteur dans le flux des gaz d'échappement de réduire considérablement voir totalement les oxydes d'azote (NOₓ), présents au sein des gaz d'échappement, en convertissant ces derniers en azote (N₂) et en eau (H₂O).

Tel qu'illustré sur la figure 2, le système **21** SCR comprend un réservoir **23** au sein duquel est stocké l'agent **22** réducteur (représenté sous forme de croix). L'agent **22** réducteur est ensuite acheminé, jusqu'à la ligne **20** d'échappement, via une canalisation **24** pour enfin être injecté au sein des gaz d'échappement par l'intermédiaire d'un injecteur **25** d'agent réducteur. L'agent **22** réducteur est injecté en amont d'un catalyseur **26,** ce dernier permettant d'accélérer la réaction chimique dans le but de transformer les oxydes d'azote (NOₓ), présents au sein des gaz d'échappement, en azote (N₂) et en eau (H₂O). Le système **21** SCR comprend, en outre, une pompe **27** raccordée directement avec le réservoir **23** et la canalisation **24,** et agencée pour fonctionner dans un sens primaire afin d'introduire l'agent **22** réducteur, via l'injecteur **25** d'agent réducteur, au sein de la ligne **20** d'échappement et dans un sens secondaire pour purger l'injecteur **25** d'agent réducteur et la canalisation **24.** Autrement dit, l'inversion du sens de fonctionnement de la pompe **27** permet d'inverser le sens de circulation de l'agent **22** réducteur au sein de la canalisation **24.**

Le système **21** SCR est piloté par le calculateur **16** et notamment l'injecteur **25** d'agent réducteur et la pompe **27.** Plus précisément, l'injecteur **25** d'agent réducteur est piloté, par le calculateur **16,** selon un état d'ouverture permettant d'établir la communication entre la canalisation **24** et la ligne **20** d'échappement, et un état de fermeture permettant de suspendre la communication entre la canalisation **24** et la ligne **20** d'échappement. D'autre part, la pompe **27** est pilotée, par le calculateur **16,** dans le sens primaire ou dans le sens secondaire.

Pour purger la canalisation **24** et l'injecteur **25** d'agent réducteur, il est nécessaire d'actionner la pompe **27** dans son sens secondaire pour créer une dépression puis d'ouvrir l'injecteur **25** d'agent réducteur pour créer un appel d'air nécessaire au retour de l'agent **22** réducteur au sein du réservoir **23.** L'injecteur **25** d'agent réducteur aspire ainsi, lors de la purge du système **21** SCR, des gaz se trouvant au sein de la ligne **20** d'échappement.

L'agent **22** réducteur utilisé pour la mise en place du système **21** de dépollution SCR est généralement de l'ammoniac ou un précurseur de l'ammoniac, par exemple de l'urée ou un dérivé de l'urée. A titre d'exemple, l'agent **22** réducteur est disponible au travers d'une solution d'AdBlue® (marque commerciale déposée). L'agent **22** réducteur sous la forme d'une solution aqueuse d'urée (par exemple composée de 32.5% en masse d'urée) gèle à environ -11°C.

Lors d'un démarrage du moteur **3,** le calculateur **16** n'actionne le système **21** SCR qu'à une certaine température des gaz d'échappement (par exemple 200°C) puisqu'en dessous de cette température l'efficacité du système **21** SCR est sensiblement réduite voire nulle.

Outre la condition mentionnée ci-dessus, le calculateur **16** est configuré pour faire fonctionner le système **21** SCR, lorsque le moteur **3** est en fonctionnement, dès que les conditions climatiques sont favorables. Cette utilisation optimisée permet de traiter au maximum les gaz d'échappement et limiter les émissions polluantes du véhicule **1.** Toutefois, lorsque le moteur **3** est en fonctionnement et que la température au voisinage du système **21** SCR est égale ou inférieure à une valeur de température prédéterminée, il est primordial de stopper l'injection d'agent **22** réducteur, et de purger la canalisation **24** et l'injecteur **25** d'agent réducteur afin d'éviter que l'agent **22** réducteur ne gèle au sein de ces derniers.

En effet, lorsque le véhicule **1** est en roulage et lors du redémarrage du système **21** SCR à la suite par exemple d'une hausse de la température au voisinage du système **21** SCR, il est préférable que celui-ci ait été préalablement purgé afin qu'il puisse fonctionner immédiatement et autrement dit traiter à nouveau les gaz d'échappement. On rappel que le réservoir **23** comprend quant à lui, un dispositif de chauffage (non représenté) permettant de liquéfier l'agent **22** réducteur stocké, lors d'un redémarrage du système **21** SCR.

Le calculateur **16** ordonne en outre la purge du système **21** SCR lors de l'arrêt du moteur **3,** toutefois celle-ci n'est pas nécessaire, lorsqu'elle a été réalisée pendant que le moteur **3** était en fonctionnement et que le système **21** SCR n'a pas été redémarré suite à cette purge, autrement dit, le système **21** SCR étant déjà purgé lors de l'arrêt du moteur **3.**

La valeur de température prédéterminée est choisie en fonction du point de cristallisation de l'agent **22** réducteur utilisé au sein du système **21** SCR.

Le calculateur **16** dispose en temps réel de diverses données issues par exemple de capteurs ou de logiciels implémentés au sein du calculateur **16.** Parmi ces données, on trouve notamment:
- la température dans le voisinage du système **21** SCR, autrement dit hors de l'habitacle du véhicule **1,** cette température étant par exemple mesurée par une sonde de température positionnée sur un rétroviseur extérieur du véhicule **1 ;**
- l'état du moteur **3 :** fonctionnement ou arrêt;
- l'état du ou des cylindre(s) **4 :** l'injection ou coupure d'injection;
- un paramètre lié à la composition des gaz présents au sein de la ligne **20** d'échappement.

Pour commander le système **21** SCR et plus précisément la purge lorsque le moteur **3** est en fonctionnement et que la température au voisinage du système **21** SCR est inférieure ou égale à une valeur prédéterminée, un procédé de gestion est mis en place par le calculateur **16,** ce procédé de gestion comprenant une opération d'actionnement de la pompe **27** dans son sens secondaire afin de purger le système **21** SCR si les conditions suivantes sont conjointement vérifiées:
- moteur **3** en état de fonctionnement;
- cylindre(s) **4** en état de coupure d'injection;
- température dans le voisinage du système **21** SCR inférieure ou égale à une valeur prédéterminée;
- paramètre lié à la composition des gaz égal à une consigne prédéterminée.

Le procédé de gestion comprend également une opération d'actionnement de l'ouverture de l'injecteur **25** d'agent réducteur, cette opération étant nécessaire pour créer l'appel d'air et ainsi obtenir un retour de l'agent **22** réducteur au sein du réservoir **23.**

Avantageusement, cette opération d'ouverture de l'injecteur **25** d'agent réducteur est ultérieure à l'opération d'actionnement de la pompe **27** dans son sens secondaire. Lors de l'ouverture de l'injecteur **25** d'agent réducteur, l'actionnement de la pompe **27** dans son sens secondaire est maintenu.

Le procédé peut également prendre en compte la vitesse de roulage du véhicule **1,** et dans ce cas, l'opération d'actionnement de la pompe **27** dans son sens secondaire est réalisée si, en plus des conditions mentionnées ci-dessus, la vitesse de roulage est supérieure ou égale à un seuil prédéterminé.

Le procédé peut en outre prendre en compte la température des gaz au sein de la ligne **20** d'échappement dans le voisinage de l'injecteur **25** d'agent réducteur, et dans ce cas, l'opération d'actionnement de la pompe **27** dans son sens secondaire est réalisée si, en plus des conditions mentionnées ci-dessus, la température des gaz est inférieure ou égale à une instruction prédéterminée.

On souhaite, par l'intermédiaire de ce procédé de gestion, profiter des phases prolongées durant lesquelles l'injection de carburant est coupée au sein de l'ensemble des cylindres **4** pour purger le système **21** SCR, étant donné que lors de ces phases, l'air ambiant admis au sein du moteur **3,** traverse celui-ci sans y subir de transformations avant d'être expulsé dans l'atmosphère via la ligne **20** d'échappement. Ainsi, lors de la purge du système **21** SCR, l'injecteur **25** d'agent réducteur aspire sous l'action de la pompe **27** de l'air ambiant, cela ayant pour principal conséquence de ne pas encrasser l'injecteur **25** d'agent réducteur et la canalisation **24.**

Le respect de la condition sur le paramètre lié à la composition des gaz au sein de la ligne **20** d'échappement, permet donc de s'assurer, lors du lancement de la purge, que le gaz présent au sein de la ligne **20** d'échappement et plus précisément au niveau de l'injecteur **25** correspond à de l'air ambiant administré au sein du moteur **3** et ne contient pas ou ne contient qu'une quantité infime de particules de suie.

La phase prolongée durant laquelle l'ensemble des cylindres **4** se trouvent dans un état de coupure d'injection de carburant correspond par exemple à l'emploi du frein moteur.

Si une des conditions mentionnée ci-dessus n'est plus vérifiée dès lors que la purge du système **21** SCR est commencée, deux cas de figure sont envisageables, à savoir soit l'interruption de la purge soit la poursuite puis l'achèvement de la purge du système **21** SCR.

Selon un premier mode de réalisation, le paramètre lié à la composition des gaz au sein de la ligne **20** d'échappement est une quantité d'air pénétrant au sein du moteur **3,** cette quantité d'air étant calculée à partir des données reçues par le débitmètre **19** positionné sur la ligne **17** d'admission. Ainsi, dès lors que l'ensemble des cylindres **4** sont en état de coupure d'injection et tout au long de cette coupure d'injection, le calculateur **16** calcule la quantité d'air pénétrant au sein du moteur **3.** On distingue alors deux cas de figure, soit le départ de la purge du système **21** SCR lorsque la quantité d'air est égale à la consigne prédéterminée, soit le report ultérieur de la purge du système **21** SCR lorsque l'injection en carburant au sein des cylindres **4** reprend avant que la quantité d'air admise au sein du moteur **3** soit égale à la consigne prédéterminée.

Selon un second mode de réalisation, le paramètre lié à la composition des gaz au sein de la ligne **20** d'échappement est un temps. Ainsi, dès lors que l'ensemble des cylindres **4** sont en état de coupure d'injection et tout au long de cette coupure d'injection, le calculateur **16** évalue le temps écoulé. On distingue alors deux cas de figure, soit le départ de la purge du système **21** SCR lorsque le temps est égal à la consigne prédéterminée, soit le report ultérieur de la purge du système **21** SCR lorsque l'injection en carburant au sein des cylindres **4** reprend avant que le temps écoulé soit égal à la consigne prédéterminée.

Le procédé de gestion du système **21** SCR, décrit ci-dessus, offre les avantages suivants.

Premièrement, le procédé de gestion permet de purger le système **21** SCR et plus précisément l'injecteur **25** d'agent réducteur et la canalisation **24,** lorsque le moteur **3** est en fonctionnement et que la température au voisinage du système **21** SCR est inférieure ou égale à la valeur prédéterminée, dès lors que le gaz présent au niveau de l'injecteur **25** d'agent réducteur est de l'air ambiant administré via la ligne **17** d'admission, et autrement dit, de l'air non pollué. Cette mesure permet d'éviter l'aspiration de particules de suies au sein de l'injecteur **25** d'agent réducteur et de la canalisation **24** avec pour principal conséquence de ne pas encrasser ces derniers. Le système **21** SCR respecte ainsi, dans le temps, les dosages d'agent **22** réducteur à injecter et par voie de conséquence dépollue correctement les gaz d'échappement.

Deuxièmement, la mise en place d'un tel procédé permet d'éviter l'insertion, au sein du système **21** SCR, de nouveaux composants tel que la vanne de mise à l'air libre nécessaire pour purger le système **21** SCR sans encrasser celui-ci au bénéfice du coût, de l'encombrement et de la fiabilité du système **21** de dépollution SCR.

## Revendications

1. Procédé de gestion d'un système **(21)** de dépollution, piloté par un calculateur **(16),** d'un groupe **(2)** motopropulseur d'un véhicule (1) automobile, ce groupe **(2)** motopropulseur comprenant :
- un moteur **(3)** à combustion interne présentant au moins un cylindre **(4)** alimenté en carburant, via un injecteur **(15)** de carburant piloté par le calculateur **(16)** qui commande l'injection de carburant ou la coupure de cette injection ;
- une ligne **(20)** d'échappement des gaz issus de la combustion ;
le système **(21)** de dépollution comprenant :
- un réservoir **(23)** contenant un agent **(22)** réducteur de dépollution ;
- un catalyseur **(26)** intégré dans la ligne **(20)** d'échappement pour être traversé par les gaz d'échappement ;
- un injecteur **(25)** d'agent réducteur, placé en amont du catalyseur **(26)** et piloté selon un état d'ouverture permettant d'établir la communication entre une canalisation **(24)** et la ligne **(20)** d'échappement, et un état de fermeture permettant de suspendre la communication entre la canalisation **(24)** et la ligne **(20)** d'échappement ;
- la canalisation **(24)** reliant le réservoir **(23)** à l'injecteur **(25)** d'agent réducteur ;
- une pompe **(27)** commandée par le calculateur **(16),** et agencée pour fonctionner dans un sens primaire pour introduire l'agent **(22)** réducteur, via l'injecteur **(25)** d'agent réducteur, au sein de la ligne **(20)** d'échappement, et dans un sens secondaire pour purger l'injecteur **(25)** d'agent réducteur et la canalisation **(24) ;**
ce procédé comprenant la prise en compte au moins des paramètres suivants :
- état général du moteur **(3)** : fonctionnement ou arrêt ;
- température dans le voisinage du système **(21)** de dépollution ; **caractérisé en ce que** ce procédé comprend également la prise en
compte des paramètres suivants :
- état du ou des cylindre(s) **(4)** : injection ou coupure d'injection ;
- paramètre lié à la composition des gaz présents au sein de la ligne **(20)** d'échappement ;
et **en ce qu'**il comprend une opération d'actionnement de la pompe **(27)** dans son sens secondaire si les conditions suivantes sont conjointement vérifiées :
- moteur **(3)** en état de fonctionnement ;
- cylindre(s) **(4)** en état de coupure d'injection ;
- température dans le voisinage du système **(21)** de dépollution inférieure ou égale à une valeur prédéterminée ;
- paramètre lié à la composition des gaz égal à une consigne prédéterminée;
et une opération d'actionnement d'ouverture de l'injecteur **(25)** d'agent réducteur.

2. Procédé selon la revendication 1, **caractérisé en ce que** le paramètre lié à la composition des gaz est une quantité d'air pénétrant au sein du moteur **(3).**

3. Procédé selon la revendication 1, **caractérisé en ce que** le paramètre lié à la composition des gaz est un temps.

4. Procédé selon l'une quelconque des revendications précédentes, **caractérisé en ce que** le procédé comprend la prise en compte du paramètre suivant:
- vitesse de roulage du véhicule **(1)** ;
l'opération d'actionnement de la pompe **(27)** dans son sens secondaire étant réalisée si:
- la vitesse de roulage du véhicule **(1)** est supérieure ou égale à un seuil prédéterminé.

5. Procédé selon l'une quelconque des revendications précédentes, **caractérisé en ce que** le procédé comprend la prise en compte du paramètre suivant:
- température des gaz, au sein de la ligne **(20)** d'échappement, dans le voisinage de l'injecteur **(25)** d'agent réducteur ;
l'opération d'actionnement de la pompe **(27)** dans son sens secondaire étant réalisée si:
- la température des gaz est inférieure ou égale à une instruction prédéterminée.

6. Procédé selon l'une quelconque des revendications précédentes, **caractérisé en ce que** le système **(21)** de dépollution est un système de réduction catalytique sélective.

7. Système **(21)** de dépollution, piloté par un calculateur **(16),** d'un groupe **(2)** motopropulseur d'un véhicule **(1)** automobile, ce système **(21)** de dépollution comprenant:
- un réservoir **(23)** contenant un agent **(22)** réducteur de dépollution ;
- un catalyseur **(26)** intégré dans la ligne **(20)** d'échappement pour être traversé par les gaz d'échappement ;
- un injecteur **(25)** d'agent réducteur, placé en amont du catalyseur **(26)** et piloté selon un état d'ouverture permettant d'établir la communication entre une canalisation **(24)** et la ligne **(20)** d'échappement, et un état de fermeture permettant de suspendre la communication entre la canalisation **(24)** et la ligne **(20)** d'échappement ;
- la canalisation **(24)** reliant le réservoir **(23)** à l'injecteur **(25)** d'agent réducteur ;
- une pompe **(27)** commandée par le calculateur **(16),** et agencée pour fonctionner dans un sens primaire pour introduire l'agent **(22)** réducteur, via l'injecteur **(25)** d'agent réducteur, au sein de la ligne **(20)** d'échappement, et dans un sens secondaire pour purger l'injecteur **(25)** d'agent réducteur et la canalisation **(24) ;**
le calculateur **(16)** prenant en compte les paramètres suivants:
- état général du moteur **(3) :** fonctionnement ou arrêt ;
- température dans le voisinage du système **(21)** de dépollution ;
- état du ou des cylindre(s) **(4)** : injection ou coupure d'injection ;
- paramètre lié à la composition des gaz présents au sein de la ligne **(20)** d'échappement ;
**caractérisé en ce que** la pompe **(27)** est actionnée dans son sens secondaire si les conditions suivantes sont conjointement vérifiées:
- moteur **(3)** en état de fonctionnement ;
- cylindre(s) **(4)** en état de coupure d'injection ;
- température dans le voisinage du système **(21)** de dépollution inférieure ou égale à une valeur prédéterminée ;
- paramètre lié à la composition des gaz égal à une consigne prédéterminée.
et l'injecteur **(25)** d'agent réducteur est ouvert.

8. Véhicule **(1)** automobile comprenant un système **(21)** de dépollution selon la revendication 7.

## Patentansprüche

1. Verfahren zum Verwalten eines Reinigungssystems (21), das von einem Rechner (16) gesteuert wird, eines Antriebsaggregats (2) eines Kraftfahrzeugs (1), wobei dieses Antriebsaggregat (2) Folgendes umfasst:
- eine Brennkraftmaschine (3), die mindestens einen Zylinder (4) aufweist, der mit Kraftstoff über eine Kraftstoffeinspritzdüse (15), die von dem Rechner (16) gesteuert wird, der das Einspritzen von Kraftstoff oder das Unterbrechen dieser Einspritzung steuert, versorgt wird;
- einen Abgasstrang (20) der Gase, die aus der Verbrennung hervorgehen;
Reinigungssystem (21) umfassend:
- einen Behälter (23), der ein Reinigungsreduktionsmittel (22) enthält,
- einen Katalysator (26), der in den Abgasstrang (20) integriert ist, um von den Abgasen durchquert zu werden;
- einen Reduktionsmittelinjektor (25), der stromaufwärts des Katalysators (26) platziert ist und gemäß einem Öffnungszustand gesteuert wird, der es erlaubt, die Verbindung zwischen einer Kanalisation (24) und dem Abgasstrang (20) herzustellen, und gemäß einem Schließzustand, der es erlaubt, die Kommunikation zwischen der Kanalisation (24) und dem Abgasstrang (20) zu unterbrechen;
- wobei die Kanalisation (24), die den Behälter (23) mit dem Reduktionsmittelinjektor (25) verbindet;
- eine Pumpe (27), die von dem Rechner (16) gesteuert wird und eingerichtet ist, um in eine Hauptrichtung zu funktionieren, um das Reduktionsmittel (22) über den Reduktionsmittelinjektor (25) innerhalb des Abgasstrangs (20) einzuführen, und in eine Nebenrichtung, um den Reduktionsmittelinjektor (25) und die Kanalisation (24) zu entleeren;
wobei das Verfahren die Berücksichtigung mindestens der folgenden Parameter umfasst:
- allgemeiner Zustand der Maschine (3): Betrieb oder Stoppen;
- Temperatur in der Nähe des Reinigungssystems (21) ;
**dadurch gekennzeichnet, dass** dieses Verfahren auch die Berücksichtigung der folgenden Parameter umfasst:
- Zustand des oder der Zylinder (4): Einspritzung oder Einspritzunterbrechung;
- Parameter, in Zusammenhang mit der Zusammensetzung der Gase, die innerhalb des Abgasstrangs (20) gegenwärtig sind;
und dass es einen Betriebszustand in ihre Nebenrichtung umfasst, falls die folgenden Bedingungen gleichzeitig erfüllt sind:
- Maschine (3) in Betriebszustand;
- Zylinder (4) in Einspritzunterbrechungszustand;
- Temperatur in der Nähe des Reinigungssystems (21) kleiner oder gleich einem vorbestimmten Wert;
- Parameter in Zusammenhang mit der Zusammensetzung der Gase gleich einem vorbestimmten Sollwert;
und einen Öffnungsbetätigungsvorgang des Reduktionsmittelinjektors (25).

2. Verfahren nach Anspruch 1, **dadurch gekennzeichnet, dass** der Parameter in Zusammenhang mit der Zusammensetzung der Gase eine Luftmenge ist, die in die Maschine (3) eindringt.

3. Verfahren nach Anspruch 1, **dadurch gekennzeichnet, dass** der Parameter in Zusammenhang mit der Zusammensetzung der Gase eine Zeit ist.

4. Verfahren nach einem der vorhergehenden Ansprüche, **dadurch gekennzeichnet, dass** das Verfahren die Berücksichtigung des folgenden Parameters umfasst:
- Fahrgeschwindigkeit des Fahrzeugs (1);
wobei der Betätigungsvorgang der Pumpe (27) in ihre Nebenrichtung ausgeführt wird, falls:
- die Fahrgeschwindigkeit des Fahrzeugs (1) größer oder gleich einem vorbestimmten Schwellenwert ist.

5. Verfahren nach einem der vorhergehenden Ansprüche, **dadurch gekennzeichnet, dass** das Verfahren die Berücksichtigung des folgenden Parameters umfasst:
- Temperatur der Gase in dem Abgasstrang (20) in der Nähe des Reduktionsmittelinjektors (25);
wobei der Betätigungsvorgang der Pumpe (27) in ihre Nebenrichtung ausgeführt wird, falls:
- die Temperatur der Gase niedriger oder gleich einer vorbestimmten Anweisung ist.

6. Verfahren nach einem der vorhergehenden Ansprüche, **dadurch gekennzeichnet, dass** das Reinigungssystem (21) ein System zur selektiven katalytischen Reduktion ist.

7. Reinigungssystem (21), das von einem Rechner (16) gesteuert wird, eines Antriebsaggregats (2) eines Kraftfahrzeugs (1), wobei das Reinigungssystem (21) Folgendes umfasst:
- einen Behälter (23), der ein Reinigungsreduktionsmittel (22) enthält;
- einen Katalysator (26), der in den Abgasstrang (20) integriert ist, um von den Abgasen durchquert zu werden;
- einen Reduktionsmittelinjektor (25), der stromaufwärts des Katalysators (26) platziert ist und gemäß einem Öffnungszustand gesteuert wird, der das Herstellen der Verbindung zwischen einer Kanalisation (24) und dem Abgasstrang (20) erlaubt, und einem Schließzustand, der das Unterbrechen der Verbindung mit der Kanalisation (24) und dem Abgasstrang (20) erlaubt;
- wobei die Kanalisation (24) den Behälter (23) mit dem Reduktionsmittelinjektor (25) verbindet;
- eine Pumpe (27), die von dem Rechner (16) gesteuert wird und eingerichtet ist, um in eine Hauptrichtung zu funktionieren, um das Reduktionsmittel (22) über den Reduktionsmittelinjektor (25) in den Abgasstrang (20) einzuführen, und in eine Nebenrichtung, um den Reduktionsmittelinjektor (25) und die Kanalisation (24) zu entleeren;
wobei der Rechner (16) folgende Parameter berücksichtigt:
- Allgemeinzustand des Motors (3) : Betrieb oder Stoppen;
- Temperatur in der Nähe des Reinigungssystems (21) ;
- Zustand des oder der Zylinder (4) : Einspritzen oder Einspritzunterbrechung;
- Parameter in Zusammenhang mit der Zusammensetzung der Gase, die in dem Abgasstrang (20) gegenwärtig sind;
**dadurch gekennzeichnet, dass** die Pumpe (27) in ihre Nebenrichtung betätigt wird, falls die folgenden Bedingungen gleichzeitig erfüllt sind:
- Maschine (3) in Betriebszustand;
- Zylinder (4) in Einspritzunterbrechungszustand;
- Temperatur in der Nähe des Reinigungssystems (21) niedriger oder gleich einem vorbestimmten Wert;
- Parameter in Zusammenhang mit der Zusammensetzung der Gase gleich einem vorbestimmten Sollwert,
und dass der Reduktionsmittelinjektor (25) offen ist.

8. Kraftfahrzeug (1), das ein Reinigungssystem (21) nach Anspruch 7 umfasst.

## Claims

1. A method for managing a pollution control system (21), driven by a computer (16), of a powertrain (2) of a motor vehicle (1), this powertrain (2) including:
- an internal combustion engine (3) having at least one cylinder (4) supplied with fuel, via a fuel injector (15) driven by the computer (16) which controls the fuel injection or the cut-off of this injection;
- an exhaust line (20) of the gases originating from the combustion;
the pollution control system (21) including:
- a reservoir (23) containing a pollution control reducing agent (22);
- a catalyzer (26) integrated in the exhaust line (20) so as to be passed through by the exhaust gases;
- a reducing agent injector (25), placed upstream of the catalyzer (26) and driven according to an open state permitting communication to be established between a pipe (24) and the exhaust line (20), and a closed state permitting the suspension of the communication between the pipe (24) and the exhaust line (20);
- the pipe (24) connecting the reservoir (23) to the reducing agent injector (25);
- a pump (27) controlled by the computer (16), and arranged so as to function in a primary direction to introduce the reducing agent (22), via the reducing agent injector (25), within the exhaust line (20), and in a secondary direction to purge the reducing agent injector (25) and the pipe (24) ;
this method including taking into account at least the following parameters:
- general status of the engine (3): in operation or stopped;
- temperature in the vicinity of the pollution control system (21);
**characterized in that** this method also includes taking into account the following parameters:
- status of the cylinder (s) (4): injection or cut-off of injection;
- parameter linked to the composition of the gases present within the exhaust line (20);
and **in that** it includes an actuating operation of the pump (27) in its secondary direction if the following conditions are jointly verified:
- engine (3) in operating state;
- cylinder(s) (4) in injection cut-off state;
- temperature in the vicinity of the pollution control system (21) less than or equal to a predetermined value;
- parameter linked to the composition of the gases equal to a predetermined setpoint;
and an actuating operation of opening of the reducing agent injector (25).

2. The method according to claim 1, **characterized in that** the parameter linked to the composition of the gases is a quantity of air penetrating within the engine (3).

3. The method according to claim 1, **characterized in that** the parameter linked to the composition of the gases is a time.

4. The method according to any one of the preceding claims, **characterized in that** the method includes the taking into account of the following parameter:
- running speed of the vehicle (1);
the operation of actuation of the pump (27) in its secondary direction being realized if:
- the running speed of the vehicle (1) is greater than or equal to a predetermined threshold.

5. The method according to any one of the preceding claims, **characterized in that** the method includes the taking into account of the following parameter:
- temperature of the gases, within the exhaust line (20), in the vicinity of the reducing agent injector (25);
the actuating operation of the pump (27) in its secondary direction being realized if:
- the temperature of the gases is less than or equal to a predetermined instruction.

6. The method according to any one of the preceding claims, **characterized in that** the pollution control system (21) is a selective catalytic reduction system.

7. A pollution control system (21), driven by a computer (16), of a powertrain (2) of a motor vehicle (1), this pollution control system (21) including:
- a reservoir (23) containing a pollution control reducing agent (22);
- a catalyzer (26) integrated in the exhaust line (20) so as to be passed through by the exhaust gases;
- a reducing agent injector (25), placed upstream of the catalyzer (26) and driven according to an open state permitting the communication to be established between a pipe (24) and the exhaust line (20), and a closed state permitting the communication to be suspended between the pipe (24) and the exhaust line (20);
- the pipe (24) connecting the reservoir (23) to the reducing agent injector (25);
- a pump (27) controlled by the computer (16), and arranged so as to function in a primary direction for introducing the reducing agent (22), via the reducing agent injector (25), within the exhaust line (20), and in a secondary direction for purging the reducing agent injector (25) and the pipe (24);
the computer (16) taking into account the following parameters:
- general status of the engine (3): in operation or stopped;
- temperature in the vicinity of the pollution control system (21);
- status of the cylinder(s) (4): injection or cut-off of injection;
- parameter linked to the composition of the gases present within the exhaust line (20);
**characterized in that** the pump (27) is actuated in its secondary direction if the following conditions are jointly verified:
- engine (3) in operating state;
- cylinder(s) (4) in injection cut-off state;
- temperature in the vicinity of the pollution control system (21) less than or equal to a predetermined value;
- parameter linked to the composition of the gases equal to a predetermined setpoint,
and the reducing agent injector (25) is open.

8. A motor vehicle (1) including a pollution control system (21) according to claim 7.
